# EUROPÄISCHE PATENTSCHRIFT

(11) **EP 1 089 907 B1**
(45) Veröffentlichungstag und Bekanntmachung des Hinweises auf die Patenterteilung: **02.06.2004**
(21) Anmeldenummer: 99919105.9
(22) Anmeldetag: 20.03.1999
(51) Int. Cl.: B62D 5/04

(54) **LENKVORRICHTUNG FÜR EIN FAHRZEUG**
VEHICLE STEERING DEVICE
SYSTEME DE DIRECTION POUR VEHICULE

(30) Priorität: 23.06.1998 DE 19827869
(43) Veröffentlichungstag der Anmeldung: 11.04.2001
(73) Patentinhaber: ROBERT BOSCH GMBH, 70442 Stuttgart (DE)
(72) Erfinder: LOHNER, Herbert, D-71292 Friolzheim (DE); DOMINKE, Peter, D-74321 Bietigheim-Bissingen (DE); CAO, Chi-Thuan, D-70825 Korntal-Münchingen (DE); LEIMBACH, Klaus-Dieter, D-71696 Möglingen (DE); HARTER, Werner, D-75428 Illingen (DE); HOMMEL, Mathias, D-70825 Korntal (DE)
(86) Internationale Anmeldenummer: PCT/DE1999/000801
(87) Internationale Veröffentlichungsnummer: WO 1999/067120

(56) Entgegenhaltungen:
- WO-A-88/00545
- DE-A- 3 434 495
- DE-A- 4 031 316
- DE-B- 1 213 267

## Beschreibung

### Stand der Technik

Die Erfindung geht aus von einer Lenkvorrichtung für ein Fahrzeug nach dem Oberbegriff des Anspruchs 1.

Aus der DE 34 34 495 A1 ist eine derartige Lenkvorrichtung für ein Fahrzeug bekannt, bei der zwischen einem Lenkrad und einem Lenkgetriebe ein Stellglied zum überlagerten Lenkeingriff durch einen gesteuerten Elektromotor angeordnet ist. Bei diesem Stellglied steht eine, mit dem Lenkrad verbundene Eingangswelle über ein erstes Stirnrad-Getriebe mit dem Elektromotor in Wirkverbindung, dessen andere Seite über ein zweites Stirnrad-Getriebe mit der Ausgangswelle des Stellglieds Verbindung hat. Während die Stirnräder-Getriebe den konstruktiven Aufwand niedrig halten, führen diese Wirkverbindungen zu einer reinen elektromechanischen Servolenkung, bei der nur eine fahrerabhängige Beeinflussung der Lenkung des Fahrzeugs möglich ist.

Ferner ist aus der DE 40 31 316 A1 eine Lenkvorrichtung bekannt; bei dieser weist das Stellglied zwei Planetengetriebe mit jeweils einem Sonnenrad, einem Hohlrad und zwischen Sonnen- und Hohlrad positionierten Planetenrädern auf. Die vom Fahrer Ober das Lenkrad beaufschlagte Eingangswelle des Stellglieds ist die Achse des Sonnenrads des ersten Planetengetriebes und die das Lenkgetriebe betätigende Ausgangswelle des Stellglieds ist die Achse des Sonnenrads des zweiten Planetengetriebes. Durch die Lenkradleistung des Fahrers werden die Planetenräder des ersten Planetengetriebes in Bewegungs gesetzt, deren Achsen mit den Planetenrädern des zweiten Planetengetriebes verbunden sind. Letztere greifen wiederum an dem zweiten Sonnenrad und dem, das Stellgliedgehäuse bildenden Hohlrad des zweiten Planetengetriebes an. Die Ausgangsleistung des Elektromotors wird über eine zweite Eingangswelle des Stellglieds, die eine Schnecke trägt, auf das Hohlrad des ersten Planetengetriebes übertragen. Mit diesem Stellglied ist es möglich, sowohl eine Lenkunterstützung des Fahrers beim Lenken zu erreichen (Servolenkung) als auch mit zusätzlichen Lenksignalen fahrerunabhängig die Lenkung des Fahrzeugs zu beeinflussen, so dass Fahrsicherheit, Fahrcomfort verbessert werden.

### Vorteile der Erfindung

Die erfindungsgemäße Lenkvorrichtung mit den Merkmalen des Anspruchs 1 hat den Vorteil, dass dem Stellglied die weitere Funktionalität einer zusätzlichen fahrerunabhängigen Beeinflussung der Lenkung des Fahrzeugs gegeben wird, wobei der konstruktive Aufwand für das Stellglied erheblich reduziert wird. Anstelle von zwei Planetenradgetrieben sind nur noch zwei einfache Unter- oder Übersetzungsgetriebe, die vorzugsweise als Zerrtriebe ausgeführt werden und eine elektromagnetische Druckluft vorhanden. Der Elektromotor ist in dem Stellglied selbst integriert und bildet mit diesem eine kompakte Baueinheit, die komplett vormontiert und dann in den Kraftfluss von Lenksäulen zum Lenkgetriebe eingesetzt wird. Durch das Ein- und Ausrücken der Kupplung werden zwei Betriebsmodi realisiert. Bei geschlossener Kupplung erzeugt der Elektromotor ein'Drehmoment, das dem vom Fahrer am Lenkrad erzeugten Drehmoment überlagert wird und so eine servogesteuerte Fahrzeugführung ermöglicht. Bei offener Kupplung überlagert der Elektromotor aufgrund von Längssignalen den Rädern einen Lenkwinkel, so dass ein vom Fahrer nicht beeinflussbare Fahrzeugsstabilisierung herbeigeführt werden kann. Wie bei der bekannten Lenkvorrichtung erfolgt dabei keine Rückwirkung auf das Lenkrad. Durch die einfachen Getriebe sind nur wenige Zahnräder in Eingriff, so dass durch geringes Zahnspiel ein extrem kleines Lenkspiel der Lenkung erreicht wird. Bei offener Kupplung lässt sich zudem in einem fest definierten Winkelbereich um die Lenkradwinkelstellung der Betriebszustand "steer by wire" realisieren, d.h. ein rein motorisch gesteuertes Lenken ohne mechanische Verbindung zwischen Lenkrad und Lenkgetriebe.

Durch die in den weiteren Ansprüchen aufgeführten Maßnahmen sind vorteilhafte Weiterbildungen und Verbesserungen der im Anspruch 1 angegebenen Lenkvorrichtung möglich.

### Zeichnung

Die Erfindung ist anhand eines in der Zeichnung dargestellten Ausführungsbeispiels in der nachfolgenden Beschreibung näher erläutert. Es zeigen jeweils in schematischer Darstellung:
- Fig. 1: eine perspektivische Ansicht einer Lenkvorrichtung eines Kraftfahrzeugs,
- Fig. 2: einen Längsschnitt eines Stellglieds oder Lenkmoduls in der Lenkvorrichtung gemäß Fig. 1.

### Beschreibung des Ausführungsbeispiels

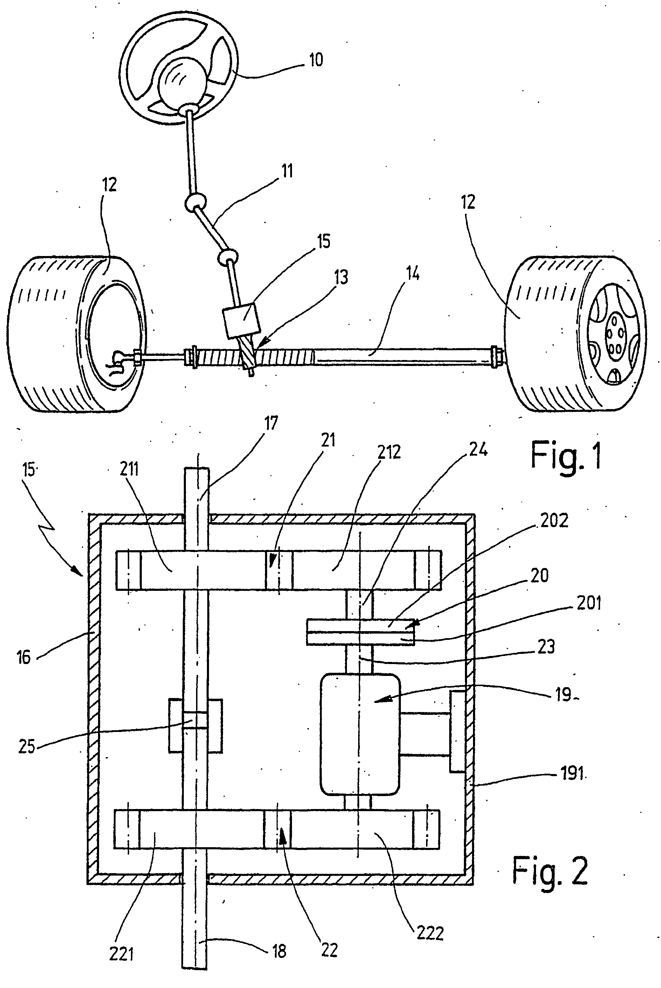

Die in Fig. 1 perspektivisch skizzierte Lenkvorrichtung für ein Kraftfahrzeug weist ein Lenkrad 10 mit Lenkwelle 11 und ein auf die Vorderräder 12 des Kraftfahrzeugs wirkendes .Lenkgetriebe 13 auf, das über eine Spurstange 14 die lenkbaren Vorderräder 12 entsprechend den Lenkradbewegungen verstellt. In der aufgetrennten Lenkwelle 11 zwischen dem Lenkrad 10 und dem Lenkgetriebe 13 ist ein Stellglied oder Lenkmodul 15 angeordnet, der dem Lenkradwinkel einen Zusatzwinkel überlagert, wodurch der Lenkwinkel der Vorderräder 12 unabhängig vom Lenkradwinkel verändert werden kann. Durch diesen Lenkmodul 15 werden Vorteile hinsichtlich Fahrdynamik, Fahrsicherheit und Fahrkomfort erzielt und zugleich eine servounterstützte Lenkung durch den Fahrer realisiert.

Der Lenkmodul 15, der in Fig. 2 im Schnitt schematisiert dargestellt ist, weist ein Gehäuse 16 mit einer Eingangswelle 17 und einer Ausgangswelle 18 auf, die im Gehäuse 16 drehbar gelagert sind. Die Eingangswelle 17 ist drehfest mit der Lenkwelle 11 verbunden, während die Ausgangswelle 18 mit dem Lenkradgetriebe 13 gekoppelt ist. Ein im Gehäuse 16 integrierter Elektromotor 19 ist in Reihe mit einer elektromagnetisch ein- und ausrückbaren Kupplung 20 über ein erstes Getriebe 21 mit der Eingangswelle 17 und über ein zweites Getriebe 22 mit der Ausgangswelle 18 verbunden. Beide Getriebe 21,22 sind als Zahnradtriebe aus zwei ineinandergreifenden Zahnrädern 211 und 212 bzw. 221 und 222 oder als Riementriebe mit entsprechenden Riemenscheiben und darüber geführten Riemen ausgeführt. Das Zahnrad 211 des ersten Getriebes 21 sitzt dabei drehfest auf der Eingangswelle 17, die die Antriebswelle des ersten Getriebes 21 darstellt, und das Zahnrad 221 des zweiten Getriebes 22 sitzt drehfest auf der Ausgangswelle 18 des Lenkmoduls 15, die die Abtriebswelle des zweiten Getriebes 22 bildet. Das Zahnrad 222 des zweiten Getriebes 22 sitzt drehfest auf der Rotorwelle 23 des Elektromotors 19, die die Antriebswelle des zweiten Getriebes 22 darstellt, während die elektromagnetische Kupplung 20 zwischen der Rotorwelle 23 und der Abtriebswelle 24 des ersten Getriebes 21 angeordnet ist. Dabei sitzt der eine Kupplungsteil 201 der Kupplung 20 drehfest auf der Rotorwelle 23 und der andere Kupplungsteil 202 drehfest auf der Abtriebswelle 24, auf dem auch das Zahnrad 212 des ersten Getriebes 21 drehfest aufgeschoben ist. Das Motorgehäuse 191 des Elektromotors 19, das in bekannter Weise den Stator drehfest und die Rotorwelle 23 mit darauf sitzendem, im Stator umlaufenden Rotor drehgelagert aufnimmt, ist undrehbar im Gehäuse 16 des Lenkmoduls 15 gehalten. Die elektromagnetische Kupplung 20 ist so ausgelegt, daß sie stromlos geschlossen ist und bei Anlegen eines Erregerstroms an den Elektromagneten ausrückt. Das Wiedereinrücken der Kupplung nach Wegfall des Erregerstroms erfolgt mittels Federkraft, und zwar ausschließlich in einer sog. Nullstellung der Kupplung 20, in welcher die beiden Kupplungsteile 201,202 drehfest miteinander verrastbar sind.

Außerdem weist das Lenkmodul 15 eine die Eingangswelle 17 und die Ausgangswelle 18 unmittelbar miteinander verbindende Koppelstelle 25 auf, welche ein Drehspiel von z.B. ca. 100° zwischen den beiden Wellen 17, 18 zuläßt.

Mit dem beschriebenen Lenkmodul 15 werden zwei Betriebsmodi realisiert:

Ist die Kupplung 20 geschlossen, so erzeugt der Elektromotor 19 ein Drehmoment, das dem vom Fahrer am Lenkrad 10 erzeugten Drehmoment überlagert wird. Damit ist eine Servolenkung realisiert, die eine Fahrzeugführung mi-t Drehmomentüberlagerung ermöglicht.

Ist die Kupplung geöffnet, so überlagert der Elektromotor aufgrund von Lenksignalen an den Vorderrädern 12 einen innerhalb der Begrenzung durch das Drehspiel der Koppelstelle 25 liegenden Lenkwinkel, ohne daß dies am Lenkrad 10 von dem Fahrer bemerkt wird. In diesem Betriebsmodus der Winkelüberlagerung kann eine Beeinflussung der Fahrdynamik über die Lenkung durchgeführt werden, die in querdynamisch kritischen Fahrsituationen zu einer Erhöhung der Fahrzeugstabilität und Fahrzeugbeherrschbarkeit führt.

Damit der Fahrer bei offener Kupplung 20 am Lenkrad 10 noch einen fühlbaren Widerstand erfährt, ist es möglich, daß mit dem Ausrücken der Kupplung 20 gleichzeitig an die Abtriebswelle 24 des ersten Getriebes 21 ein mechanischer Reibwiderstand angelegt wird.

Fällt die Stromversorgung von Kupplung 20 und Elektromotor 19 aus, so ist eine Notlenkung des Fahrzeugs möglich, da die Eingangswelle 17 über das erste Getriebe 21, die eingerückte Kupplung 20, die Rotorwelle 23 des Elektromotors 19 und das zweite Getriebe 22 mit der Ausgangswelle 18 des Lenkgetriebes 13 drehfest verbunden ist.

## Patentansprüche

1. Lenkvorrichtung für ein Fahrzeug mit Lenkrad (10) und Lenkgetriebe (13) und mit einem dazwischen angeordneten Stellglied (15) zum überlagerten Lenkeingriff durch einen gesteuerten Elektromotor (19), das eine mit dem Lenkrad (10) in Verbindung stehende Eingangswelle (17) und eine mit dem Lenkgetriebe (13) verbundene Ausgangswelle (18) aufweist, wobei der Elektromotor (19) über ein erstes Getriebe (21) mit der Eingangswelle (17) und über ein zweites Getriebe (22) mit der Ausgangswelle (18) in Eingriff steht, **dadurch gekennzeichnet, dass** eine zusätzlich mit dem Elektromotor (19) in Reihe ausgeführte ein- und ausrückbare Kupplung (20) vorgesehen ist, welche über das erste Getriebe (21) mit der Eingangswelle (17) gekoppelt bzw. entkoppelt wird.

2. Lenkvorrichtung nach Anspruch 1, **dadurch gekennzeichnet, daß** jedes Getriebe (21,22) eine An- und Abtriebswelle aufweist, von denen die Antriebswelle des ersten Getriebes (21) die Eingangswelle (17) des Stellglieds (15) und die Abtriebswelle des zweiten Getriebes (22) die Ausgangswelle (18) des Stellglieds (15) darstellt, und daß die Rotorwelle (23) des Elektromotors (19) unter Zwischenschaltung der Kupplung (20) mit der Abtriebswelle (24) des ersten Getriebes (21) und der Antriebswelle des zweiten Getriebes (22) jeweils starr verbunden und das den Stator aufnehmende Motorgehäuse (191) am Stellgliedgehäuse (16) festgelegt ist.

3. Lenkvorrichtung nach Anspruch 2, **dadurch gekennzeichnet, daß** jeweils ein Kupplungsteil (201,202) mit der Rotorwelle (23) und der Abtriebswelle (24) des ersten Getriebes (21) drehfest verbunden ist und daß die Rotorwelle (23) die Antriebswelle des zweiten Getriebes (22) bildet.

4. Lenkvorrichtung nach einem der Ansprüche 1 - 3, **dadurch gekennzeichnet, daß** die Kupplung (20) elektromagnetisch betätigbar und vorzugsweise stromlos geschlossen ist.

5. Lenkvorrichtung nach einem der Ansprüche 1 - 4, **dadurch gekennzeichnet, daß** die Kupplung (20) eine Nullstellung aufweist, in welcher die beiden Kupplungsteile (201,202) drehfest miteinander verrastbar sind.

6. Lenkvorrichtung nach Anspruch 1 oder 2, **dadurch gekennzeichnet, daß** die Eingangswelle (17) und die Ausgangswelle (18) über eine Koppelstelle (25) miteinander teilweise gegeneinander verdrehbar verbunden sind, so daß ein fest definiertes Drehspiel zwischen beiden Wellen (17, 18) zugelassen wird.

## Claims

1. Steering device for a vehicle, with a steering wheel (10) and a steering mechanism (13) and with an actuator (15), arranged between them, for overriding steering engagement by means of a controlled electric motor (19) which has an input shaft (17) connected to the steering wheel (10) and an output shaft (18) connected to the steering mechanism (13), the electric motor (19) being in engagement with the input shaft (17) via a first gear unit (21) and with the output shaft (18) via a second gear unit (22), **characterized in that** an engagable and disengagable clutch (20) is provided, which is additionally designed in series with the electric motor (19) and which is respectively coupled to and uncoupled from the input shaft (17) via the first gear unit (21).

2. Steering device according to Claim 1, **characterized in that** each gear unit (21, 22) has a drive shaft and driven shaft, of which the drive shaft of the first gear unit (21) constitutes the input shaft (17) of the actuator (15) and the driven shaft of the second gear unit (22) constitutes the output shaft (18) of the actuator (15), and **in that** the rotor shaft (23) of the electric motor (19) is rigidly connected, with the clutch (20) interposed, in each case to the driven shaft (24) of the first gear unit (21) and to the drive shaft of the second gear unit (22), and the motor housing (191) receiving the stator is secured to the actuator housing (16).

3. Steering device according to Claim 2, **characterized in that** in each case a clutch part (201, 202) is connected fixedly in terms of rotation to the rotor shaft (23) and to the driven shaft (24) of the first gear unit (21), and **in that** the rotor shaft (23) forms the drive shaft of the second gear unit (22).

4. Steering device according to one of Claims 1-3, **characterized in that** the clutch (20) can be actuated electromagnetically and is closed preferably when currentless.

5. Steering device according to one of Claims 1-4, **characterized in that** the clutch (20) has a neutral position, in which the two clutch parts (201, 202) can be interlocked with one another fixedly in terms of rotation.

6. Steering device according to Claim 1 or 2, **characterized in that** the input shaft (17) and the output shaft (18) are connected to one another via a coupler location (25) so as to be partially rotatable with respect to one another, so that a permanently defined rotary play between the two shafts (17, 18) is permitted.

## Revendications

1. Système de direction pour un véhicule équipé d'un volant de direction (10) et d'un mécanisme de direction (13) et d'un actionneur (15) placé entre eux afin d'assurer un engrènement de direction superposé grâce à un moteur électrique (19) commandé présentant un arbre d'entrée (17) relié au volant de direction (10) et un arbre de sortie (18) relié au mécanisme de direction (13), le moteur électrique (19) s'engrenant avec l'arbre d'entrée (17) via un premier réducteur (21) et avec l'arbre de sortie (18) via un deuxième réducteur (22),
**caractérisé en ce qu'**
il est prévu, en plus, un embrayage (20) pouvant être embrayé et débrayé relié en série avec le moteur électrique (19), embrayage couplé à l'arbre d'entrée (17) ou découplé de cet arbre via le premier réducteur (21).

2. Système de direction selon la revendication 1,
**caractérisé en ce que**
chaque réducteur (21, 22) présente un arbre d'entraînement et un arbre entraîné, dont l'arbre d'entraînement du premier réducteur (21) représente l'arbre d'entrée (17) de l'actionneur (15) et l'arbre entraîné du deuxième réducteur (22) représente l'arbre de sortie (18) de l'actionneur (15), et l'arbre de rotor (23) du moteur électrique (19) est à chaque fois solidement relié, lors de la commutation de l'embraye (20), à l'arbre entraîné (24) du premier réducteur (21) et à l'arbre d'entraînement du deuxième réducteur (22), et le carter de moteur (191) dans lequel est logé le stator est fixé sur le carter d'actionneur (16).

3. Système de direction selon la revendication 2,
**caractérisé en ce qu'**
à chaque fois, une pièce d'embrayage (201, 202) est reliée sans torsion à l'arbre de rotor (23) et à l'arbre entraîné (24) du première réducteur (21), et l'arbre de rotor (23) forme l'arbre d'entraînement du deuxième réducteur (22).

4. Système de direction selon l'une quelconque des revendications 1 à 3,
**caractérisé en ce que**
l'embrayage (20) peut être actionné de manière électromagnétique et est de préférence fermé sans courant.

5. Système de direction selon l'une quelconque des revendications 1 à 4,
**caractérisé en ce que**
l'embrayage (20) présente une position zéro dans laquelle les deux pièces d'embrayage (201, 202) peuvent être mutuellement enclenchées sans torsion.

6. Système de direction selon la revendication 1 ou 2,
**caractérisé en ce que**
l'arbre d'entrée (17) et l'arbre de sortie (18) sont reliés mutuellement et partiellement tout en pouvant tourner l'un par rapport à l'autre, de telle sorte qu'un jeu défini de manière précise entre les deux arbres (17, 18) est possible.
